# EUROPEAN PATENT APPLICATION

(11) **EP 4 730 257 A1**
(43) Date of publication of application: **22.04.2026**
(21) Application number: 24845391.2
(22) Date of filing: 09.07.2024
(51) Int. Cl.: G06T 7/00, B66F 9/24, G06V 10/74

(54) **IDENTIFICATION SYSTEM, IDENTIFICATION METHOD, AND WORK VEHICLE**

(30) Priority: 27.07.2023 JP 2023122270
(71) Applicant: Komatsu Ltd., Tokyo 105-8316 (JP)
(72) Inventor: IWANAGA, Yoshihiro, Tokyo 105-8316 (JP)
(74) Representative: Flügel Preissner Schober Seidel
(86) International application number: PCT/JP2024/024775
(87) International publication number: WO 2025/023010

(57) **Abstract**

An identification system 1 includes a three-dimensional sensor 11 that is attached to a work vehicle and detects objects present around the work vehicle, and a controller 20. The controller 20 acquires point cloud data that is object detection data from the three-dimensional sensor 11, estimates a plane constituting at least a part of an outer shape of a target from the point cloud data, extracts a point cloud located on the estimated plane to generate a binary image, and identifies the target from the binary image.

## Description

### Technical Field

The present disclosure relates to an identification system, an identification method and a work vehicle.

### Background Art

For example, in order to perform accurate loading work by a work vehicle such as a dump truck, a wheel loader, a shovel, or a forklift, it is necessary to improve the identification performance of a work target by the work vehicle. There is known a technique related to an automatic excavator that automatically performs a series of processing of excavating an excavation object and loading the excavated object onto a loading target as disclosed in Patent Literature 1. In the technique described in Patent Literature 1, the relative position of the loading target with respect to the excavator and the relative posture of the excavator with respect to the loading target are calculated using the image captured by a stereo camera. As disclosed in Patent Literature 2, there is known a technique related to a cargo handling vehicle that extracts an observation point cloud from three-dimensional distance data, extracts a feature in a case where the extracted observation point cloud includes the feature representing a front surface of the cargo handling target, and specifies a position, a direction, and a width of the cargo handling target.

### Citation List

### Patent Literature

Patent Literature 1: JP H10-088625 A
Patent Literature 2: JP 2016-210586 A

### Summary of Invention

### Technical Problem

In a case where target identification processing is performed using an image, it may be difficult to identify the target depending on capturing conditions such as brightness at the time of capturing the image. In a case where the target identification processing is performed using three-dimensional data of an object detected by a three-dimensional sensor, a processing load increases, and calculation in real time may be difficult.

An aspect of the present disclosure is to provide an identification system, an identification method, and a work vehicle capable of appropriately identifying a target from point cloud data that is three-dimensional data.

### Solution to Problem

According to an aspect of the present disclosure, there is provided an identification system for identifying a target from objects present around a work vehicle, the identification system including: an object detection sensor attached to the work vehicle and configured to detect the objects present around the work vehicle; and a controller. The controller acquires point cloud data that is object detection data from the object detection sensor, estimates a plane constituting at least a part of an outer shape of a target from the point cloud data, extracts a point cloud located on the estimated plane to generate a binary image, and identifies the target from the binary image.

According to an aspect of the present disclosure, there is provided an identification method for identifying a target from objects present around a work vehicle, the identification method including: a step of acquiring point cloud data that is object detection data from an object detection sensor attached to the work vehicle and configured to detect the objects present around the work vehicle; a step of estimating a plane constituting at least a part of an outer shape of a target from the point cloud data; a step of extracting a point cloud located on the estimated plane to generate a binary image; and a step of identifying the target from the binary image.

According to an aspect of the present disclosure, there is provided a work vehicle including a vehicle body, an object detection sensor attached to the vehicle body and configured to detect objects present around the work vehicle, and a controller. The controller acquires point cloud data that is object detection data from the object detection sensor, estimates a plane constituting at least a part of an outer shape of a target from the point cloud data, extracts a point cloud located on the estimated plane to generate a binary image, and identifies the target from the binary image.

### Advantageous Effects of Invention

According to an aspect of the present disclosure, an identification system and a work vehicle capable of appropriately identifying a target from point cloud data that is three-dimensional data are provided.

### Brief Description of Drawings

Fig. 1 is a side view illustrating a work vehicle according to a first embodiment.
Fig. 2 is a functional block diagram illustrating an identification system according to the first embodiment.
Fig. 3 is a block diagram illustrating a computer system according to the first embodiment.
Fig. 4 is a schematic diagram illustrating an operation of the work vehicle according to the first embodiment.
Fig. 5 is a view illustrating an example of a point cloud indicating a target.
Fig. 6 is a schematic diagram for explaining an example of target identification processing.
Fig. 7 is a view illustrating an example of a target binary image.
Fig. 8 is a view illustrating an example of a target feature pattern.
Fig. 9 is a flowchart illustrating an example of processing of a target identification method according to the first embodiment.
Fig. 10 is a perspective view illustrating a work vehicle according to a second embodiment.
Fig. 11 is a schematic diagram illustrating an operation of the work vehicle according to the second embodiment.
Fig. 12 is a schematic diagram and a perspective view for explaining another example of the target identification processing.
Fig. 13 is a schematic diagram and a plan view for explaining another example of the target identification processing.
Fig. 14 is a diagram for explaining another example of the target identification processing.
Fig. 15 is a view illustrating another example of the target binary image.
Fig. 16 is a diagram illustrating an example of the target feature pattern.
Fig. 17 is a flowchart illustrating an example of processing of the target identification method according to the second embodiment.

### Description of Embodiments

Hereinafter, embodiments according to the present disclosure will be described with reference to the drawings, but the present disclosure is not limited thereto. The components of the embodiments to be described below can be appropriately combined. In addition, some components may not be used.

### [First Embodiment]

### <Work Vehicle>

A work vehicle identifies a target from objects present around the work vehicle at the work site. The work vehicle is, for example, a wheel loader, a forklift, or the like.

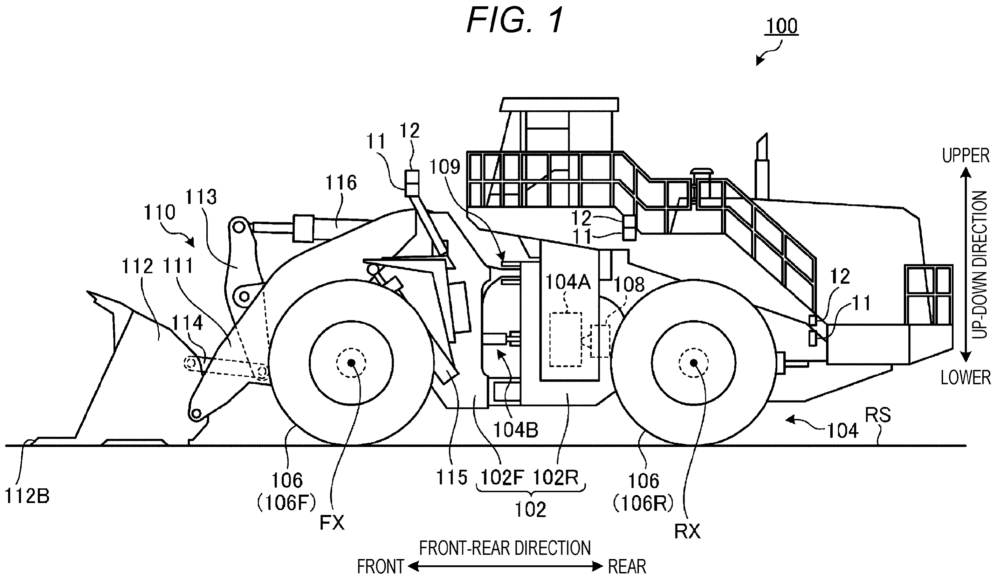

Fig. 1 is a side view illustrating the work vehicle according to a first embodiment. In the present embodiment, a work vehicle 100 is a wheel loader. The work vehicle 100 may be a manned vehicle operated by a driving operation of a driver, or may be an unmanned vehicle operated in an unmanned manner. A wheel loader 100 performs a loading operation of loading a conveyance object picked up by a work machine 110.

In the present embodiment, a target identified by the wheel loader 100 is a vessel of a dump truck.

As illustrated in Fig. 1, the wheel loader 100 includes a vehicle body 102, a traveling device 104, and the work machine 110.

The vehicle body 102 includes a vehicle body front portion 102F and a vehicle body rear portion 102R disposed behind the vehicle body front portion 102F. The vehicle body front portion 102F and the vehicle body rear portion 102R are bendably connected via a joint mechanism 109.

The traveling device 104 supports the vehicle body 102 and travels on the ground RS. The traveling device 104 includes a power source 104A, a steering device 104B, wheels 106, and a power transmission device 108.

The power source 104A generates power for driving the wheel loader 100. The power source 104A is, for example, an electric motor.

The steering device 104B is provided in the joint mechanism 109 in order to steer the wheel loader 100. When the steering device 104B operates, the vehicle body front portion 102F is bent with respect to the vehicle body rear portion 102R. When the vehicle body front portion 102F is bent with respect to the vehicle body rear portion 102R, the traveling direction of the wheel loader 100 is adjusted. The steering device 104B is, for example, a hydraulic cylinder.

The wheels 106 include two front wheels 106F rotatably supported by the vehicle body front portion 102F and two rear wheels 106R rotatably supported by the vehicle body rear portion 102R.

In the embodiment, the left-right direction is a direction parallel to the rotation axes of the front wheels 106F and the rear wheels 106R when the wheel loader 100 travels in a straight traveling state. The up-down direction is a direction orthogonal to the ground contact surfaces of the front wheels 106F and the rear wheels 106R. The front-back direction is a direction orthogonal to each of the left-right direction and the up-down direction.

The power transmission device 108 transmits the driving force of the power source 104A to the wheels 106. In the power transmission device 108, the wheel loader 100 is accelerated or decelerated by changing the output from the power source 104A. In the power transmission device 108, the wheel loader 100 moves forward or backward by switching the rotation directions of the wheels 106.

The work machine 110 is supported by the vehicle body front portion 102F. At least a part of the work machine 110 is disposed in front of the vehicle body front portion 102F. The work machine 110 includes a boom 111, a bucket 112, a bell crank 113, a link 114, a boom cylinder 115, and a bucket cylinder 116.

The boom 111 is rotatably connected to the vehicle body front portion 102F. The bell crank 113 is connected to the bucket 112 via the link 114. The bucket 112 is rotatably connected to a distal end portion of the boom 111. The bucket 112 is a work member having a distal end portion 112B including a blade edge. The bucket 112 is disposed in front of the front tires 106F.

The boom cylinder 115 is a hydraulic cylinder that generates power for operating the boom 111. When the boom cylinder 115 expands and contracts, the boom 111 performs a raising operation or a lowering operation.

The bucket cylinder 116 is a hydraulic cylinder that generates power for operating the bucket 112. When the bucket cylinder 116 expands and contracts, the bucket 112 performs a dumping operation or a tilting operation. When the bucket 112 performs the tilting operation, the bucket 112 scoops up the excavated object. When the bucket 112 performs the dumping operation, the excavated object held by the bucket 112 is discharged from the bucket 112.

### <Identification System of Work Vehicle>

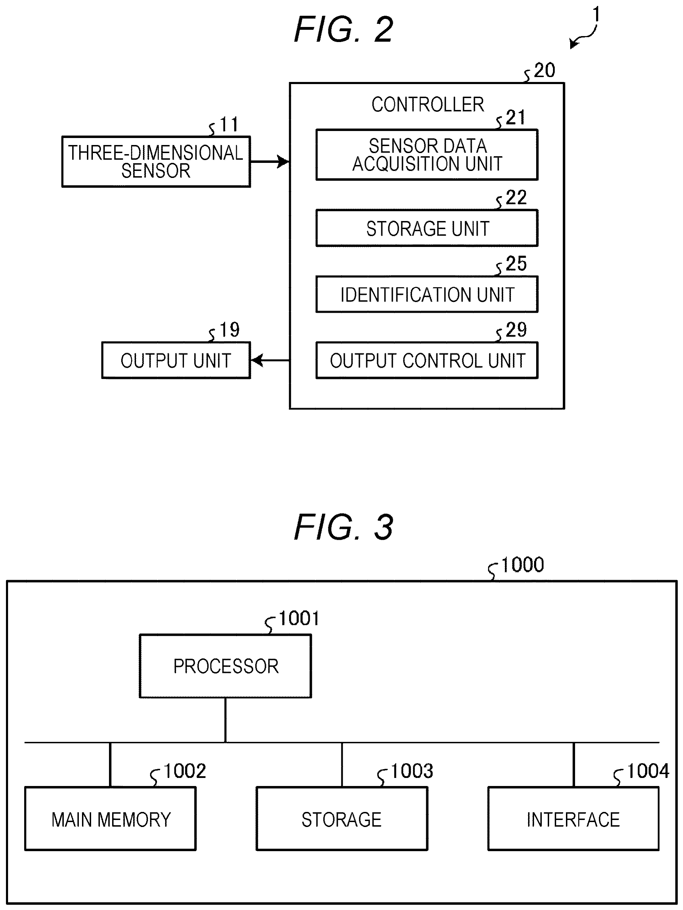

Fig. 2 is a functional block diagram illustrating an identification system according to the first embodiment. An identification system 1 of the wheel loader 100 includes a three-dimensional sensor (object detection sensor) 11, an output unit 19, and a controller 20. The three-dimensional sensor 11, the output unit 19, and the controller 20 are connected to communicate data wirelessly or by wire.

The three-dimensional sensor 11 is attached to the wheel loader 100. In the embodiment, the three-dimensional sensor 11 is attached to the front portion of the wheel loader 100. The number of three-dimensional sensors 11 is not particularly limited, and for example, a plurality of three-dimensional sensors 11 may be disposed in the wheel loader 100. The three-dimensional sensor 11 is an object detection sensor that detects an object present around the wheel loader 100. In the embodiment, the three-dimensional sensor 11 is an object detection sensor that detects an object present in front of the wheel loader 100. The three-dimensional sensor 11 can detect, for example, a range of about several 10 [m]. The three-dimensional sensor 11 transmits the detected object detection data to the controller 20.

The three-dimensional sensor 11 acquires three-dimensional data of the object. The three-dimensional data of the object includes a point cloud including a plurality of detection points defined on the surface of the object. The point cloud indicates a relative distance and a relative position between the three-dimensional sensor 11 and each of the plurality of detection points defined on the surface of the object. As the three-dimensional sensor 11, a laser sensor (light detection and ranging (LiDAR)) that detects an object by emitting laser light is exemplified. Note that the three-dimensional sensor 11 may be another non-contact sensor such as an infrared sensor that detects an object by emitting infrared light or a radar sensor (radio detection and ranging(RADAR)) that detects an object by emitting radio waves.

The output unit 19 outputs an identification result. The output unit 19 is, for example, a monitor, a lamp, a buzzer, or the like. The output unit 19 outputs the identification result under the control of an output control unit 29.

### <Controller>

The controller 20 identifies an object around the wheel loader 100. The controller 20 can acquire object detection data from the three-dimensional sensor 11 as an object detection sensor. The controller 20 includes a numerical operation device (processor) such as a central processing unit (CPU).

Fig. 3 is a block diagram illustrating a computer system according to the first embodiment. The controller 20 includes a computer system 1000. The computer system 1000 includes a processor 1001 such as the CPU, a main memory 1002 including a nonvolatile memory such as a read only memory (ROM) and a volatile memory such as a random access memory (RAM), a storage 1003, and an interface 1004 including an input/output circuit. The above-described function of the controller 20 is stored in the storage 1003 as a program. The processor 1001 reads the program from the storage 1003, develops the program in the main memory 1002, and executes the above-described processing according to the program. Note that the program may be distributed to the computer system 1000 via a network.

In the embodiment, the controller 20 includes a sensor data acquisition unit 21, a storage unit 22, an identification unit 25, and the output control unit 29.

The sensor data acquisition unit 21 acquires object detection data from the three-dimensional sensor 11. The object detection data acquired by the sensor data acquisition unit 21 is, for example, a point cloud including a plurality of detection points. Hereinafter, the object detection data is referred to as point cloud data.

The storage unit 22 includes at least one of the RAM, the ROM, a flash memory, and a hard disk drive. The storage unit 22 stores data and the like used in processing of the controller 20.

The storage unit 22 stores a search range that is a range in which a target is estimated to be present. The storage unit 22 stores a feature pattern of the target for identifying the target.

The search range is a range in which a plane extraction point cloud is extracted. The plane extraction point cloud is used for processing of identifying a target from point cloud data that is object detection data. The point cloud data includes point clouds of a measured distance and a viewing angle of the three-dimensional sensor 11.

The target feature pattern is an image indicating the shape of a planar portion in the outer shape of the target. In the present embodiment, the feature pattern is a binary image of a side surface of a vessel of a dump truck.

The identification unit 25 identifies a target from the object detection data of the three-dimensional sensor 11. More specifically, the identification unit 25 estimates a plane constituting at least a part of the outer shape of the target from the point cloud data acquired by the sensor data acquisition unit 21, extracts a point cloud located on the estimated plane to generate a binary image, and identifies the target from the binary image.

The identification unit 25 projects the point cloud data onto the projection plane, three-dimensionally restores a portion having a high point cloud density on the projection plane, and estimates the plane of the target.

The identification unit 25 detects a shape similar to the binary image of a feature pattern indicating a shape of a planar portion in an outer shape of the target stored in advance from the generated binary image to identify the target.

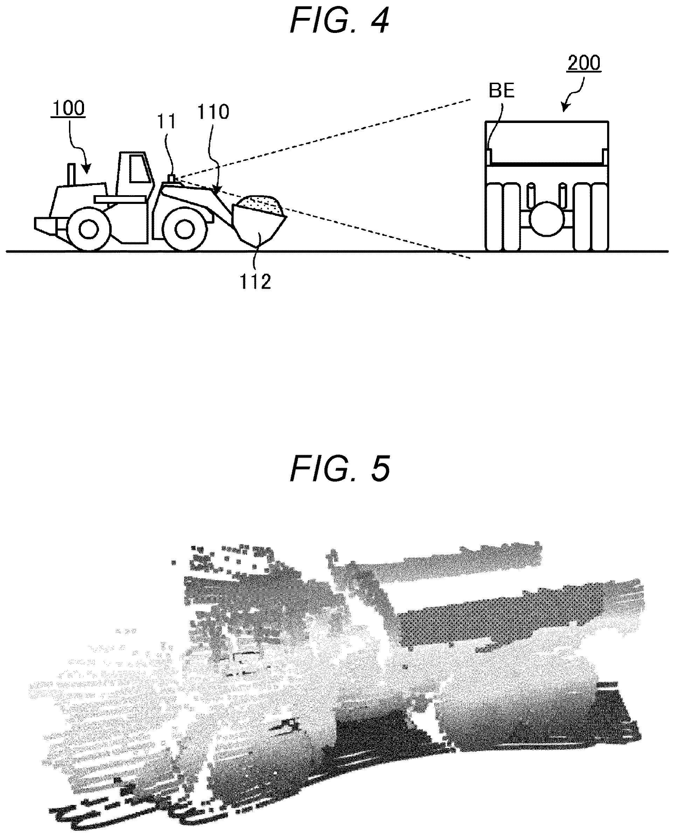

Fig. 4 is a schematic diagram illustrating an operation of the work vehicle according to the first embodiment. The wheel loader 100 identifies a dump truck 200 to be loaded in order to load a conveyance object picked up by the work machine 110. The wheel loader 100 identifies a vessel BE of the dump truck 200 on the basis of the object detection data acquired from the three-dimensional sensor 11.

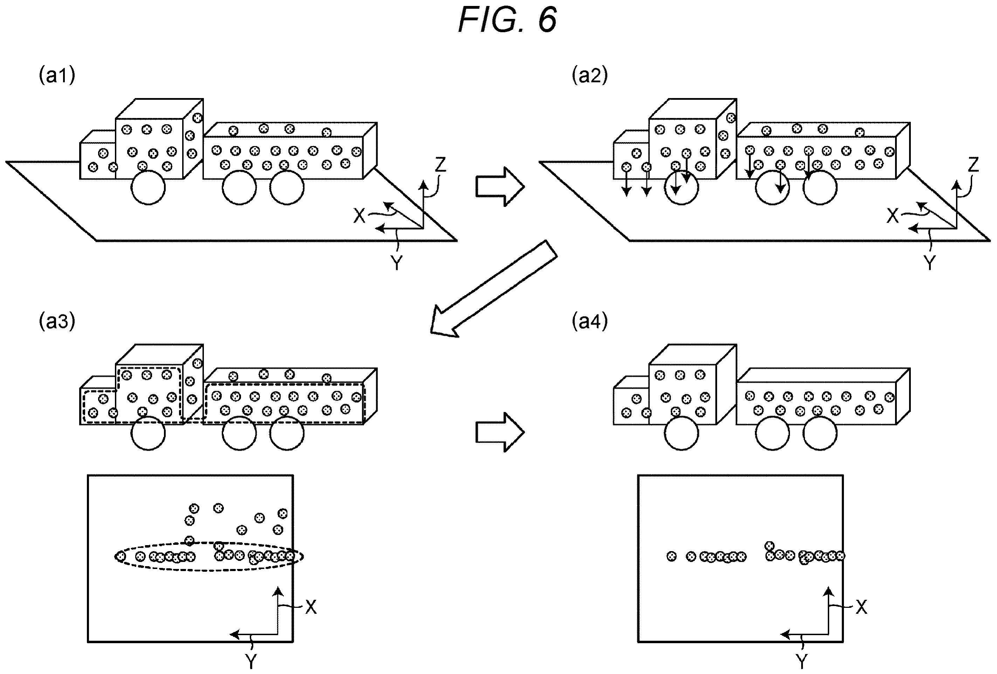

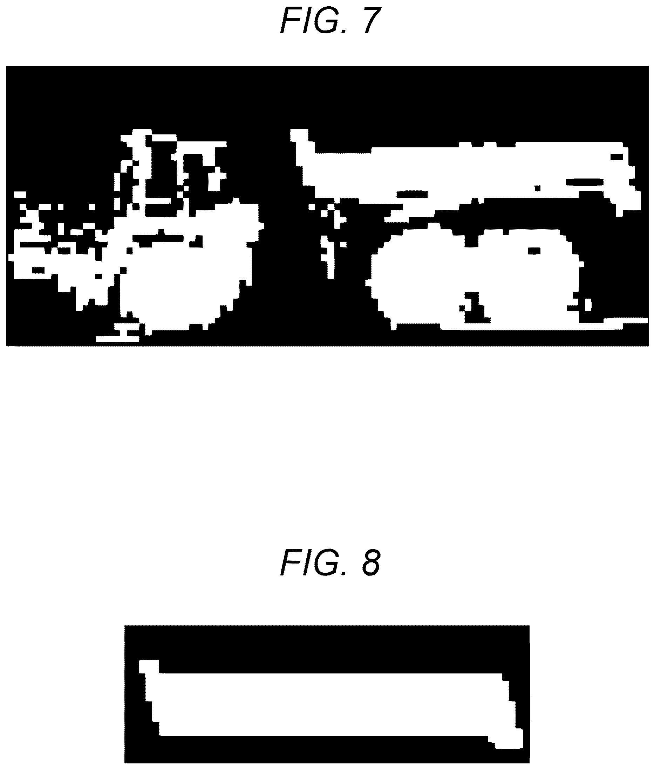

With reference to Figs. 5 to 8, the target identification processing by the identification unit 25 will be described. Fig. 5 is a diagram illustrating an example of a point cloud indicating a target. Fig. 6 is a schematic diagram for explaining an example of the target identification processing. Fig. 7 is a view illustrating an example of a target binary image. Fig. 8 is a view illustrating an example of the target feature pattern. As illustrated in Fig. 5, the point cloud includes a plurality of detection points defined on the surface of the object. First, as illustrated in Fig. 6, the identification unit 25 estimates a plane constituting a target from the point cloud data. As illustrated in Fig. 6 (a1), the identification unit 25 extracts a point cloud within the search range from the point cloud data to acquire a point cloud to be identified. Then, as illustrated in Fig. 6 (a2), the identification unit 25 projects the plane extraction point cloud onto an xy plane of the coordinate system in which a z axis is orthogonal to the ground plane. Fig. 6 (a3) illustrates the point cloud projected on the xy plane. The point cloud surrounded by a broken line on the xy plane corresponds to a point cloud on a side surface orthogonal to the xy plane surrounded by a broken line of the dump truck. The point cloud on the plane orthogonal to the xy plane of the dump truck is aggregated on one line segment and becomes dense. Then, as illustrated in Fig. 6 (a4), the identification unit 25 performs conversion to the original three-dimensional position while leaving a portion surrounded by a broken line having a high point cloud density on the xy plane. In this manner, the identification unit 25 estimates a plane constituting the target by extracting an on-plane point cloud that is a point cloud on the plane constituting the target. In this example, the on-plane point cloud is a point cloud on the vessel side surface.

As illustrated in Fig. 7, the identification unit 25 generates a binary image on the basis of the extracted on-plane point cloud. The identification unit 25 crops a plane peripheral point cloud, which is a point cloud around the estimated plane, as a point cloud for binary image generation to generate a binary image. The identification unit 25 detects a shape similar to the feature pattern indicating the shape of the vessel illustrated in Fig. 8 in the generated binary image. In a case where the similar shape is found, the identification unit 25 identifies the entire shape of the dump truck using the detection position and the shape of the vessel of the feature pattern as references.

The output control unit 29 controls to output the identification result by the identification unit 25 via the output unit 19. For example, in a case where a target is identified, the output control unit 29 outputs a video signal for displaying a video indicating the identified target on the monitor. For example, in a case where a target is identified, the output control unit 29 outputs a control signal for turning on the lamp. For example, in a case where a target is identified, the output control unit 29 outputs a control signal for sounding a buzzer.

### <Processing by Controller>

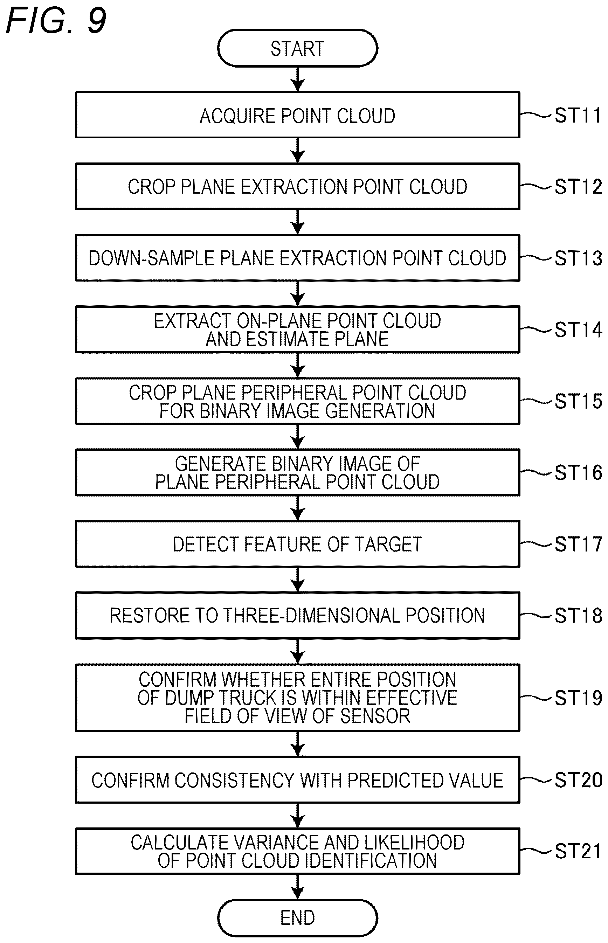

When the target identification processing is started during the activation of wheel loader 100, the processing illustrated in Fig. 9 is executed. Fig. 9 is a flowchart illustrating an example of processing of the target identification method according to the first embodiment. The processing of the flowchart illustrated in Fig. 9 is the target identification processing. Note that the processing from step ST19 to step ST21 is not essential processing.

The controller 20 acquires a point cloud (step ST11). More specifically, the controller 20 receives the point cloud data from the three-dimensional sensor 11 by the sensor data acquisition unit 21. The controller 20 proceeds to step ST12.

The controller 20 crops the plane extraction point cloud (step ST12). More specifically, the controller 20 extracts a point cloud included in a search range in which a target is estimated to be present from the point cloud data as a plane extraction point cloud by the identification unit 25. The controller 20 proceeds to step ST13.

The controller 20 down-samples the plane extraction point cloud (step ST13). More specifically, the controller 20 down-samples the plane extraction point cloud using voxel down-sampling which is an example of a down-sampling method of the point cloud data by the identification unit 25. The controller 20 proceeds to step ST14.

The controller 20 extracts the on-plane point cloud and estimates a plane (step ST14). More specifically, the controller 20 extracts the on-plane point cloud, which is a point cloud on the vessel side surface, from the down-sampled plane extraction point cloud and estimates the vessel side surface, which is a plane by the identification unit 25. The controller 20 proceeds to step ST15.

The controller 20 crops a point cloud for binary image generation. (Step ST15). More specifically, the controller 20 crops the plane peripheral point cloud, which is a point cloud around the estimated plane, as a point cloud for binary image generation by the identification unit 25. The controller 20 proceeds to step ST16.

The controller 20 generates a binary image of the plane peripheral point cloud (step ST16). More specifically, the controller 20 performs binary imaging on the yz plane of the coordinate system in which the normal vector of the estimated plane coincides with the direction of an x axis based on the cropped plane peripheral point cloud by the identification unit 25. The yz plane is a plane including the estimated plane. The controller 20 proceeds to step ST17.

The controller 20 detects a feature of a target from the binary image (step ST17). More specifically, the controller 20 detects a shape similar to the feature pattern in the binary image by the identification unit 25. The controller 20 proceeds to step ST18.

The controller 20 restores to the three-dimensional position (step ST18). More specifically, the controller 20 identifies the entire position, posture, and shape of the dump truck using the detection position and the shape of the vessel of the feature pattern in the binary image as references by the identification unit 25. The controller 20 proceeds to step ST19.

The controller 20 confirms whether the entire position of the dump truck is within the effective field of view of the sensor (step ST19). More specifically, the controller 20 confirms whether the entire position of the dump truck is within the effective field of view of the three-dimensional sensor 11 by the identification unit 25. This is to confirm that the identification performance is guaranteed because the identification performance is deteriorated around the boundary of the field of view of the three-dimensional sensor 11.

The controller 20 confirms consistency with a predicted value (step ST20). More specifically, the controller 20 compares the predicted position of the target predicted from the previous estimation result with the position of the target currently estimated to confirm whether the difference is equal to or less than a threshold by the identification unit 25.

The controller 20 calculates the variance and likelihood of the point cloud identification (step ST21).

In this manner, the controller 20 identifies the target vessel of the dump truck from the point cloud data.

### <Effects>

As described above, in the present embodiment, the plane of the outer shape of the target is estimated from the point cloud data, the point cloud located on the estimated plane is extracted to generate the binary image, and the target is identified from the binary image. As a result, in the present embodiment, the processing load can be reduced as compared with the case where the point cloud data is used as it is for the identification processing. In the present embodiment, since the processing load is reduced, it is possible to suppress deterioration in identification performance such as delay in identification processing. As described above, according to the present embodiment, the target can be appropriately identified from the point cloud data that is the three-dimensional data.

In the present embodiment, the point cloud data is projected onto the projection plane, and a portion having a high point cloud density on the projection plane is three-dimensionally restored to estimate the plane of the target. According to the present embodiment, the plane can be estimated with high accuracy by removing noise of the point cloud data.

In the present embodiment, a shape similar to the binary image of the feature pattern stored in advance is detected from the generated binary image to identify the target. According to the present embodiment, the processing load can be reduced by using the binary image.

In this manner, according to the present embodiment, the vessel of the dump truck can be appropriately identified.

### [Second Embodiment]

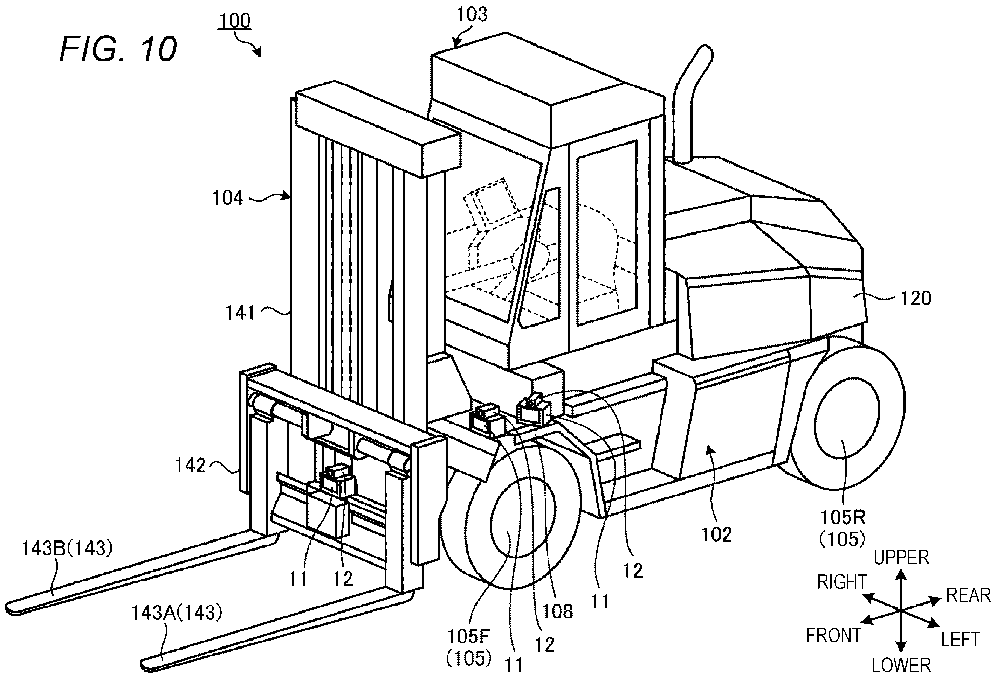

A second embodiment will be described with reference to Figs. 10 to 17. Fig. 10 is a perspective view illustrating a work vehicle according to the second embodiment. In the second embodiment, the work vehicle 100 is a forklift which is a type of cargo handling vehicle. The processing by the identification unit 25 of the controller 20 is different from that of the first embodiment. Structures similar to those of the first embodiment are denoted by the same or corresponding reference signs, and description thereof is omitted.

### <Work Vehicle>

A forklift 100 performs cargo handling work. The cargo handling work includes loading work of picking up a conveyance object placed at a predetermined storage position. In the present embodiment, the target identified by the work vehicle is a conveyance object. The conveyance object is a loading platform or a case for loading a cargo. The conveyance object is, for example, a pallet, a skid, or a container. The conveyance object has a pair of fork insertion holes. In the present embodiment, the target identified by the work vehicle is, for example, a box-shaped pallet.

In the present embodiment, the feature pattern is a binary image of the fork insertion holes in the front face of the pallet.

As illustrated in Fig. 10, the forklift 100 includes the vehicle body 102, a work machine 104 disposed in front of the vehicle body 102, wheels 105 that support the vehicle body 102, the three-dimensional sensor 11, and a camera 12.

The vehicle body 102 includes a counter-weight 120 and fenders 108. The counter-weight 120 is disposed at the rear portion of the vehicle body 102. The counter-weight 120 is attached to the rear portion of the vehicle body 102 in order to balance the weight of the forklift 100 in the front-rear direction when the forklift 100 picks up a conveyance object. The fenders 108 are disposed at the front portion of the vehicle body 102. The fenders 108 are individually disposed on the left side and the right side of the vehicle body 102.

The work machine 104 performs at least a part of the cargo handling work. The work machine 104 is disposed in front of the vehicle body 102. The work machine 104 is supported by the vehicle body 102. The work machine 104 includes a mast 141, a bracket 142, and a fork 143.

The mast 141 is tiltably supported by the front portion of the vehicle body 102. The mast 141 is long in the up-down direction. The bracket 142 supports the fork 143. The bracket 142 is supported by the mast 141. The bracket 142 is movable in the up-down direction along the mast 141. The fork 143 supports a conveyance object. The fork 143 is supported by the mast 141 via the bracket 142.

A pair of the forks 143 is provided. The forks 143 include a first fork 143A and a second fork 143B disposed on the right side of the first fork 143A. The bracket 142 supports the first fork 143A and the second fork 143B.

The wheels 105 support the vehicle body 102. At least a part of each of the wheels 105 is disposed below the vehicle body 102. The wheels 105 include front wheels 105F and rear wheels 105R. The front wheels 105F are disposed in front of the rear wheels 105R. The front wheels 105F are individually disposed on the left side and the right side of the vehicle body 102. The rear wheels 105R are individually disposed on the left side and the right side of the vehicle body 102. Each of the front wheels 105F and the rear wheels 105R is rotatable about a rotation axis. One or both of the front wheels 105F and the rear wheels 105R are steering wheels. In the embodiment, the rear wheels 105R are steering wheels. Note that the front wheels 105F may be steering wheels, or both the front wheels 105F and the rear wheels 105R may be steering wheels.

In the embodiment, the left-right direction is a direction parallel to the rotation axes of the front wheels 105F and the rear wheels 105R when the forklift 100 travels in a straight traveling state. The up-down direction is a direction orthogonal to the ground contact surfaces of the front wheels 105F and the rear wheels 105R. The front-back direction is a direction orthogonal to each of the left-right direction and the up-down direction.

Each of the fenders 108 is disposed so as to cover at least a part of each of the front wheels 105F. At least a part of each of the fenders 108 is disposed above each of the front wheels 105F. At least a part of each of the fenders 108 is disposed behind each of the front wheels 105F. The fenders 108 are individually disposed on the left side and the right side of the vehicle body 102. The left fender 108 is disposed so as to cover at least a part of the front wheel 105F on the left side. The right fender 108 is disposed so as to cover at least a part of the front wheel 105F on the right side.

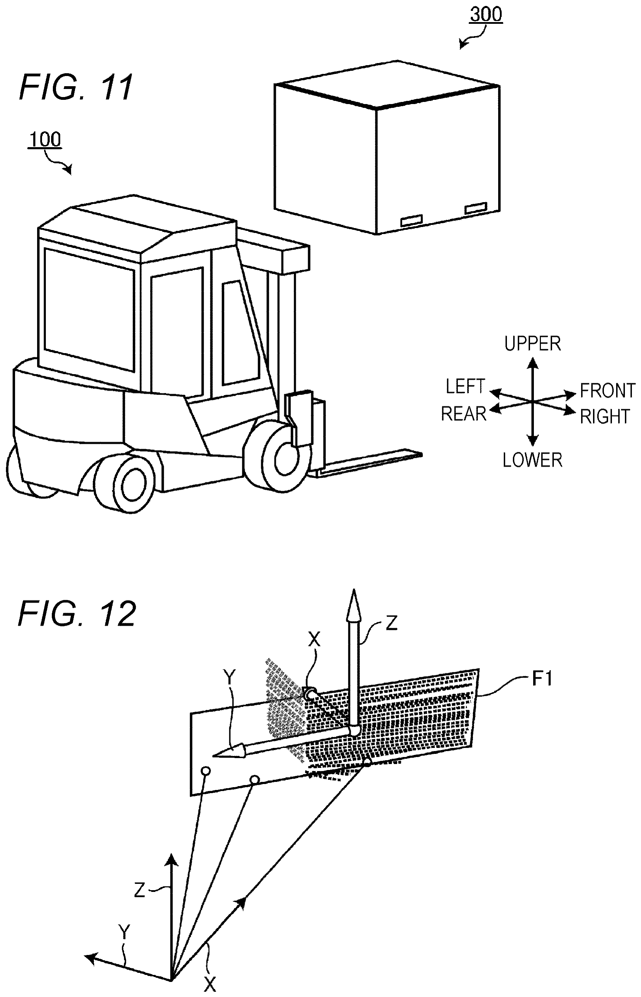

Fig. 11 is a schematic diagram illustrating an operation of the work vehicle according to the second embodiment. The forklift 100 identifies a pallet 300 to be subjected to the loading work in order to perform the cargo handling work. The forklift 100 identifies the pallet 300 on the basis of the object detection data acquired from the three-dimensional sensor 11.

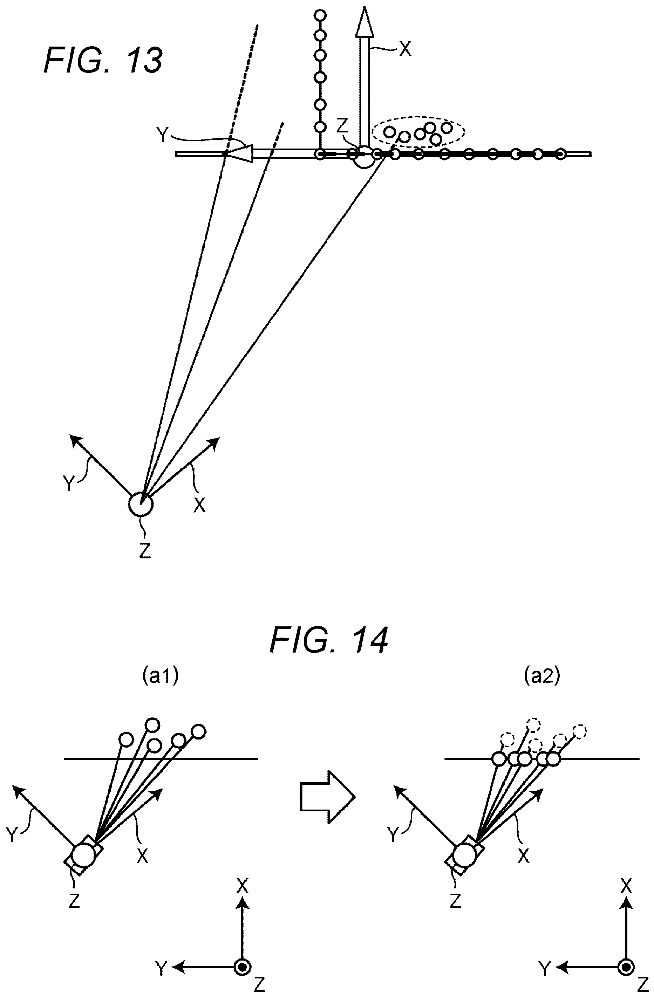

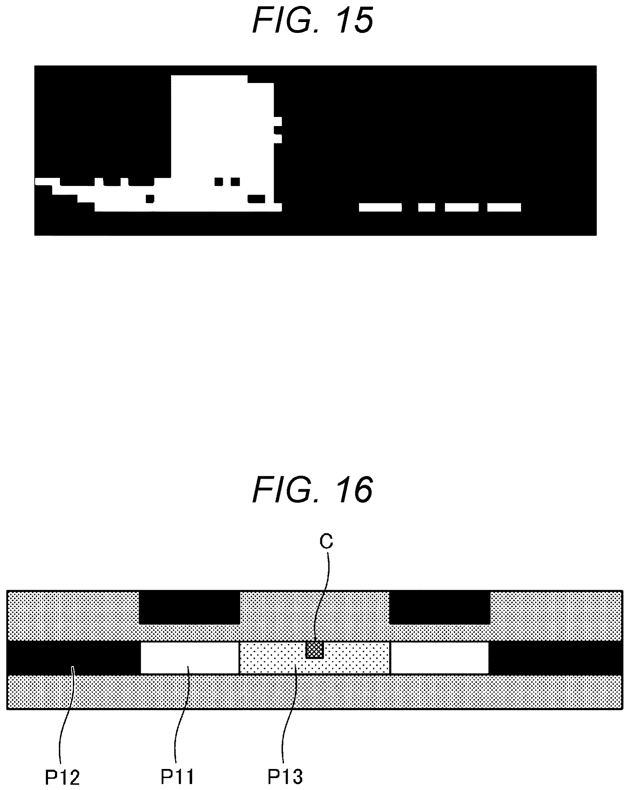

With reference to Figs. 12 to 16, the identification processing by the identification unit 25 will be described. Fig. 12 is a schematic diagram and a perspective view for explaining another example of the target identification processing. Fig. 13 is a schematic diagram and a plan view for explaining another example of the target identification processing. Fig. 14 is a diagram for explaining another example of the target identification processing. Fig. 15 is a view illustrating another example of the target binary image. Fig. 15 is a view illustrating an example of the target feature pattern. Fig. 16 is a diagram illustrating an example of the target feature pattern.

Similarly to the first embodiment, the identification unit 25 estimates the pallet front surface as a plane and generates a binary image of the pallet front surface.

The identification unit 25 moves a passing point cloud that has passed through the front surface of the pallet to an intersection with the front surface of the pallet on a straight line connecting each point with the three-dimensional sensor 11, and generates a binary image of the passing point cloud from the moved passing point cloud. As illustrated in Figs. 12 and 13, a point cloud that has passed through the estimated pallet front surface and is positioned behind the estimated pallet front surface is referred to as a plane passing point cloud. The identification unit 25 calculates an intersection between a straight line connecting each point of the plane passing point cloud that has passed through the estimated pallet front surface and the position of the three-dimensional sensor 11 and the pallet front surface. In Fig. 13, the estimated pallet front surface is indicated by a broken line. In Fig. 13, a point cloud appears above the estimated pallet front surface. A point cloud surrounded by an ellipse indicates the point cloud that has passed through the estimated pallet front surface. In other words, the point cloud surrounded by the ellipse is the point cloud that has passed through the fork insertion holes of the conveyance object. As illustrated in Fig. 14, the identification unit 25 moves the plane passing point cloud to the position of the calculated intersection. That is, the identification unit 25 moves the plane passing point cloud onto the pallet front surface. Fig. 14 (a1) is a diagram in which an intersection of the estimated pallet front surface and a straight line connecting the point cloud that has passed through the pallet front surface and the coordinate system reference of the three-dimensional sensor 11 is obtained. Fig. 14 (a2) is a diagram in which the point cloud is supplemented at the position of the intersection obtained in (a1). In this manner, the identification unit 25 calculates the position where each point of the plane passing point cloud has passed through the plane.

As illustrated in Fig. 15, the identification unit 25 generates a binary image from the plane passing point cloud. The identification unit 25 performs filtering based on the generated binary image and the feature pattern of the fork insertion hole illustrated in Fig. 16 to calculate similarity. The identification unit 25 searches for a pattern similar to the fork insertion hole pattern in the binary image. In the example illustrated in Fig. 16, a region P11 is a region where the probability that the fork insertion hole is located is high. A region P12 is a region where the probability that the fork insertion hole is located is low. In a region P13, the probability that the fork insertion hole is located is between the region P11 and the region P12. C indicates a midpoint of the fork insertion hole.

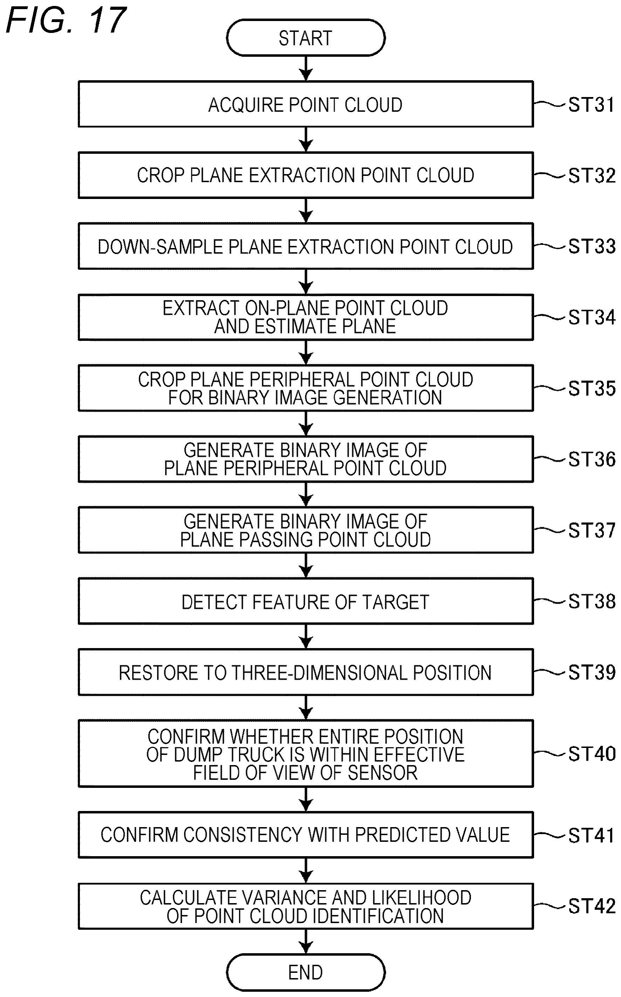

Fig. 17 is a flowchart illustrating an example of processing of the target identification method according to the second embodiment. In steps ST31 to ST36 and steps ST38 to ST42, the similar processing to the processing performed in steps ST11 to ST16 and steps ST17 to ST21 of the flowchart illustrated in Fig. 9 is performed.

The controller 20 generates a binary image of the plane passing point cloud (step ST37). More specifically, the controller 20 generates a binary image of the plane passing point cloud that has passed through the estimated pallet front surface by the identification unit 25.

In this manner, the controller 20 identifies the fork insertion hole of the pallet, which is a target, from the point cloud data.

### <Effects>

As described above, in the present embodiment, the passing point cloud that has passed through the front surface of the estimated pallet is moved to an intersection with the front surface of the estimated pallet on a straight line connecting each point with the three-dimensional sensor 11, and a binary image of the passing point cloud is generated from the moved passing point cloud. In the present embodiment, as described above, by projecting the point cloud onto the plane, the points on the plane are aggregated on the line segment and the density becomes high. In the present embodiment, noise is removed by increasing the density. According to the present embodiment, the fork insertion hole can be identified with high accuracy even if the distance between the three-dimensional sensor 11 and the target is separated and the point cloud density is sparse.

On the other hand, in the conventional technique, when the distance between the three-dimensional sensor 11 and the target is separated, the point cloud density becomes sparse, and it becomes difficult to specify the position of the fork insertion hole from the point cloud.

In this manner, according to the present embodiment, the fork insertion hole of the pallet can be appropriately identified.

### Reference Signs List

- 1: Identification system
- 11: Three-dimensional sensor (object detection sensor)
- 19: Output unit
- 20: Controller
- 21: Sensor data acquisition unit
- 22: Storage unit
- 25: Identification unit
- 29: Output control unit
- 100: Wheel loader (work vehicle)
- 102: Vehicle body
- 102F: Vehicle body front portion
- 102R: Vehicle body rear portion
- 104: Traveling device
- 104A: Power source
- 104B: Steering device
- 106: Wheel
- 106F: Front wheel
- 106R: Rear wheel
- 109: Joint mechanism
- 110: Work machine
- 111: Boom
- 112: Bucket
- 112B: Distal end portion
- 113: Bell crank
- 114: Link
- 115: Boom cylinder
- 116: Bucket cylinder
- 1000: Computer system
- 1001: Processor
- 1002: Main memory
- 1003: Storage
- 1004: Interface

## Claims

1. An identification system for identifying a target from objects present around a work vehicle, the identification system comprising:
an object detection sensor attached to the work vehicle and configured to detect the objects present around the work vehicle; and
a controller,
wherein the controller:
acquires a point cloud data being object detection data from the object detection sensor;
estimates a plane constituting at least a part of an outer shape of a target from the point cloud data;
extracts a point cloud located on the estimated plane to generate a binary image; and
identifies the target from the binary image.

2. The identification system according to claim 1,
wherein the controller
detects a shape similar to a binary image of a feature pattern indicating a shape of a planar portion in an outer shape of the target stored in advance from the generated binary image to identify the target.

3. The identification system according to claim 2,
wherein the target is a vessel of a dump truck,
the plane is a side surface of the vessel, and
the feature pattern indicates a shape of the side surface of the vessel.

4. The identification system according to claim 2,
wherein the target is a fork insertion hole of a conveyance object,
the plane is a front surface of the conveyance object,
the feature pattern indicates a shape of the fork insertion hole, and
the controller
moves a passing point cloud that has passed through the front surface of the conveyance object to an intersection with the front surface of the conveyance object on a straight line connecting each point with the object detection sensor, and generates a binary image of the passing point cloud from the moved passing point cloud.

5. An identification method for identifying a target from objects present around a work vehicle, the identification method comprising:
acquiring point cloud data being object detection data from an object detection sensor attached to the work vehicle and configured to detect the objects present around the work vehicle;
estimating a plane constituting at least a part of an outer shape of a target from the point cloud data;
extracting a point cloud located on the estimated plane to generate a binary image; and
identifying the target from the binary image.

6. A work vehicle comprising:
a vehicle body;
an object detection sensor attached to the vehicle body and configured to detect objects present around the work vehicle; and
a controller,
wherein the controller:
acquires a point cloud data being object detection data from the object detection sensor;
estimates a plane constituting at least a part of an outer shape of a target from the point cloud data;
extracts a point cloud located on the estimated plane to generate a binary image; and
identifies the target from the binary image.
